# EUROPEAN PATENT APPLICATION

(11) **EP 3 352 504 A1**
(43) Date of publication of application: **25.07.2018**
(21) Application number: 17152551.2
(22) Date of filing: 23.01.2017
(51) Int. Cl.: H04W 36/18, H04W 88/16

(54) **A METHOD, USER GATEWAYS AND A COMPUTER PROGRAM PRODUCT FOR TRANSFERRING A COMMUNICATION SESSION**

(71) Applicant: Nokia Solutions and Networks Oy, 02610 Espoo (FI)
(72) Inventor: ADHARAPURAPU, Pramod, 560045 Bangalore (IN); KANUGOVI, Satish, 560045 Bangalore (IN); RAJKUMAR, Ajay, Murray Hill, NJ New Jersey 07974-0636 (US)
(74) Representative: Bryers LLP

(57) **Abstract**

A method for transferring, from a source apparatus to a target apparatus, a communication session, the method comprising transmitting an out-of-band or in-band session transfer handshake request from the source apparatus to the target apparatus, receiving, at a user plane gateway of the source apparatus and in response to an out-of-band or in-band session transfer handshake request acknowledgement received at the source apparatus from the target apparatus, a first session transfer request from the source device, receiving, at a user plane gateway of the target apparatus, a second session transfer request from the target device, the second session transfer request transmitted from the target device in response to receipt of session transfer data transmitted out-of-band or in-band by the source device, performing a session transfer handshake between the user plane gateways of the source and target apparatus, validating the first and second session requests and modifying network address information of data packets passing through the user plane gateways whereby to enable data packets destined for the source device to be directed to the target device and data packets originating from the target device to have an uplink network address of the source device.

## Description

### TECHNICAL FIELD

Aspects relate, in general, to a method for transferring a communication session, and a computer program product.

### BACKGROUND

In a communications network, such as wireless telecommunications network for example, an end device, also known as user equipment, which may be a mobile telephone for example, may be engaged in a communication session with a network apparatus forming a session endpoint, such as a server for example.

As user equipment are mobile and may also be able to use multiple different access technologies such as LTE, WiFi and/or Wire on the uplink and/or downlink, the operation to transfer a session between user equipment and the process is not transparent to the end point and the interruption degrades user experience. Transparent session continuity may be implemented by sending messages related to changes in network address to a network path controller so the network path controller can make appropriate changes to provide seamless session continuity.

### SUMMARY

According to an example, there is provided a method for transferring, from a source apparatus to a target apparatus, a communication session, the method comprising transmitting an out-of-band or in-band session transfer handshake request from the source apparatus to the target apparatus, receiving, at a user plane gateway of the source apparatus and in response to an out-of-band or in-band session transfer handshake request acknowledgement received at the source apparatus from the target apparatus, a first session transfer request from the source device, receiving, at a user plane gateway of the target apparatus, a second session transfer request from the target device, the second session transfer request transmitted from the target device in response to receipt of session transfer data transmitted out-of-band or in-band by the source device, performing a session transfer handshake between the user plane gateways of the source and target apparatus, validating the first and second session requests and modifying network address information of data packets passing through the user plane gateways whereby to enable data packets destined for the source device to be directed to the target device and data packets originating from the target device to have an uplink network address of the source device. The method can further comprise performing a session transfer handshake acknowledgement between the user plane gateways of the source and target apparatus following successful validation of the first and second session requests. The method can further comprise transmitting a session transfer acknowledgement from the user plane gateway of the source apparatus to the source apparatus. The method can further comprise transmitting a session transfer acknowledgement from the user plane gateway of the target apparatus to the target apparatus. The network address information of data packets passing through the user plane gateways can be modified using address mapping data at the respective user plane gateways. The session transfer handshake request from the source device can include an authentication token and a network address of the user plane gateway of the source apparatus. The session transfer handshake acknowledgement from the target device can include an authentication token and a network address of the user plane gateway of the target apparatus. Validating the first session request can include authenticating the source apparatus using an authentication token received at the user plane gateway of the source apparatus. Validating the second session request can include authenticating the target apparatus using an authentication token received at the user plane gateway of the target apparatus. The first session transfer request can be validated at the user plane gateway of the source device. The second session transfer request can be validated at the user plane gateway of the target device. The user plane gateways of the source apparatus and the target apparatus can be provided on the same network entity or element. The user plane gateways of the source apparatus and the target apparatus can be provided on respective different network entities or elements.

According to an example, there is provided a computer program product, comprising a computer usable medium having computer readable program code embodied therein, said computer readable program code adapted to be executed to implement a method for transferring, from a source apparatus to a target apparatus, a communication session as provided herein.

According to an example, there is provided a user plane gateway, the user plane gateway configured to receive, in response to an out-of-band or in-band session transfer handshake request acknowledgement received at the source apparatus from a target apparatus, a first session transfer request from the source device, perform a session transfer handshake with a user plane gateway of the target apparatus and modify network address information of data packets passing through the user plane gateway of the source apparatus whereby to enable data packets destined for the source device to be directed to the target device and data packets originating from the target device to have an uplink network address of the source device.

According to an example, there is provided a user plane gateway, the user plane gateway configured to receiver a second session transfer request from a target device, the second session transfer request transmitted from the target device in response to receipt of session transfer data transmitted out-of-band or in-band by a source device and perform a session transfer handshake with a user plane gateway of the source apparatus.

### BRIEF DESCRIPTION OF THE DRAWINGS

Embodiments will now be described, by way of example only, with reference to the accompanying drawings, in which:
Figure 1 is a schematic representation of a network according to an example; and
Figure 2 is a schematic representation of a message flow according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, a session transfer between a source device or apparatus and a target device or apparatus, one or both of which can be user equipment for example, can be made in a transparent manner such that the application end-point in the network is agnostic / transparent to the session transfer. When the application server (application end-point in the network) is kept unaware of the user equipment change, the application session can continue without interruption even when the session is transferred between the source and target devices.

Data packets can be routed to the target device after the session transfer is initiated in a transparent manner such that the end point of the application/service is agnostic to the session mobility or continuity. In an example, an access gateway at the edge of the network, through which a communication session is routed, can maintain mapping information in the form of a mapping table for the source and destination device network addresses and port numbers. Also, application state information and an authentication token can be sent from the source device to the target device, via the access gateway, so that the target device can generate the session transfer request with appropriate parameters (including authorization to receive the transferred session data for example).

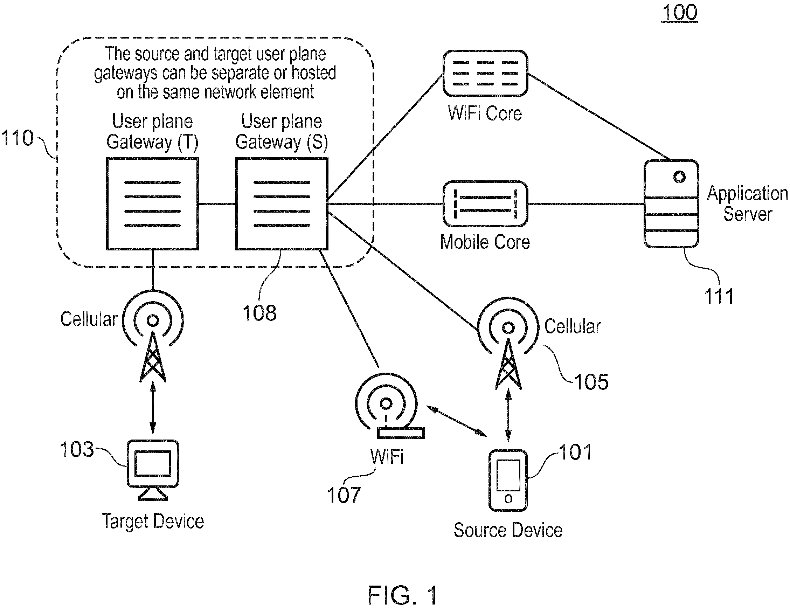

Figure 1 is a schematic representation of a network according to an example. Network 100 includes a source device 101 and a target device 103. The source and target devices can either be connected to the same network, e.g. both connected to cellular 105 or both connected to WiFi 107, or connected to separate networks, e.g. source device connected to cellular 105 and target device connected to WiFi 107, or any such combination of networks.

The source device 101 is connected to the application server 111 via user plane gateway 108 and target device 103 is connected via user plane gateway 110. In another example, user plane gateway 108 and user plane gateway 110 can be a single network element, which can be placed either at the access edge (e.g. ETSI MEC, 3GPP distributed User Plane Function) or at the core (e.g. 3GPP PGW (Packet Gateway), 3GPP Centralized User Plane Function (UPF)).

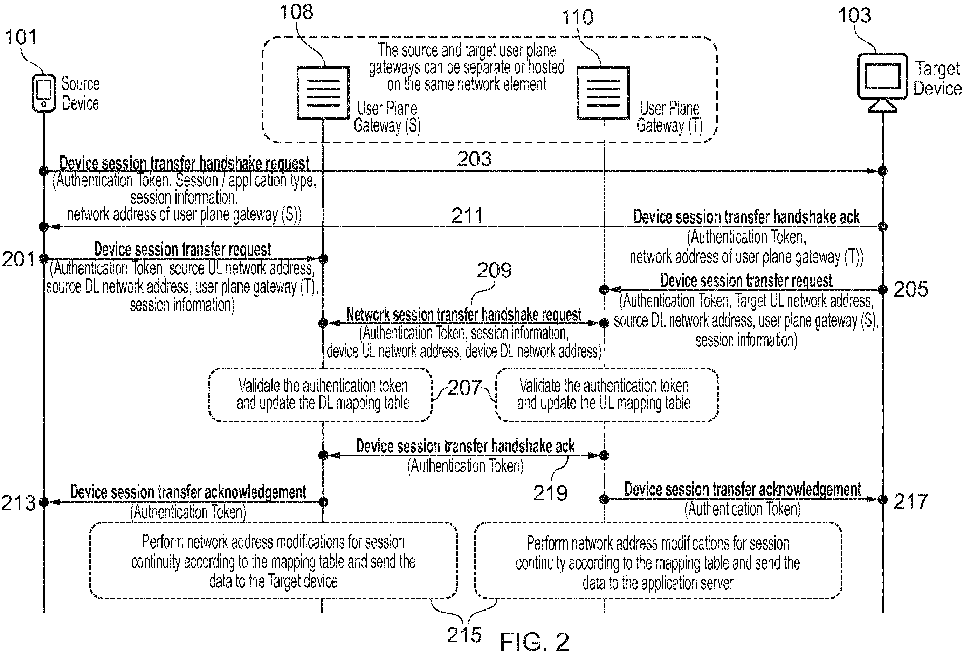

Figure 2 is a schematic representation of a message flow according to an example. When the source device 101 wants to perform a session transfer it can send signaling messages (referring to figure 2, a session transfer request 201) to the user plane gateway 108 to initiate the session transfer. The trigger for session transfer could be user action or current geo-location or any other condition, which the device is able to detect.

According to an example, in order to perform a session transfer to a target device 103 in such a way that the application server I I 1 (other end point) is unaware of the transfer, the source device 101 can send an out-of-band or in-band session transfer handshake request to the target apparatus. In this context, out-of-band means that the message can be sent directly without recourse to the network itself and in-band means that the message is sent with recourse to the network. That is, a message sent out-of-band is sent outside of a defined telecommunications frequency band or outside some other kind of activity, such as a communications and/or data session for example.

In an example, the following information can be provided as part of the request:
- Authentication Token;
- Session / Application type;
- session information (e.g. IP address, port number used by the source device 101 to communicate with the application server)
- Network address of the source user plane gateway

In response to an out-of-band or in-band session transfer handshake request acknowledgement 211 received at the source apparatus 101 from the target apparatus 103, which can also include an Authentication Token, Session / Application type and session information (e.g. IP address, port number used by the target apparatus 103 to communicate with the application server), network address of the target user plane gateway, a first session transfer request 201 can be transmitted from the source apparatus 101 to the user plane gateway 108.

A second session transfer request 205 is transmitted from the target apparatus 103 to the user plane gateway 110 in response to receipt of the session transfer data 211 transmitted out-of-band or in-band by the source device 101. A session transfer handshake 209 can then be performed between the user plane gateways 108, 110 of the source and target apparatus, and the first 201 and second 205 session requests can be validated using, for example, the authentication tokens. The network address information of data packets passing through the user plane gateways is modified 215 whereby to enable data packets destined for the source device to be directed to the target device and data packets originating from the target device to have an uplink network address of the source device.

Thus, the authentication token and the network address of the user plane gateway 108 can be communicated 203 from the source device 101 to the target device 103 out-of-band or in-band, via existing communication techniques. The target device 103 can initiate a session transfer request 205 to the user plane gateway 110 using the authentication token it received from the source device 101 and also provide its uplink and downlink network addresses (the network addresses could be different or same).

After receiving the session transfer request 205 from the target device 103, the user plane gateway 110 can authenticate 207 the target device 103 using the authentication token, and using the session specific information received, create a mapping as depicted below to perform packet modification:

| | **Source 101 network address and port in the packet** | **Mapped source 101 network address and port** | **Destination 103 network address and port in the packet** | **Mapped destination 103 network address and port** |
|---|---|---|---|---|
| **Downlink Mapping Data to Device From Application Server III** | Application Server III network address and application server port | No change | Source device 101 downlink network address and source device application port | Target device 103 downlink network address and target device application port |
| **Uplink Mapping Data from device To Application Server III** | Target device 103 uplink network address and target device application port | Source device 101 uplink network address and source device application port | Application Server III network address and application server port | No change |

Accordingly, network address information of data packets passing through the user plane gateways 108, 110 can be modified whereby to enable data packets destined for the source device 101 (from the network device 111) to be directed to the target device 103 and data packets originating from the target device 103 to have an uplink network address of the source device 101.

In an example, the target device 103 acknowledges 211 the session transfer handshake request 203 and indicates that it is ready to receive the packets for the transferred session. User plane gateways 108, 110 perform a session transfer handshake 209 in which UL and DL network address data is shared, and the authentication tokens are validated. A network session transfer handshake acknowledgement 219 can be performed between the user plane gateways 108, 110 in response to successful validation (for example, if the authentication tokens are as expected).

A device session transfer acknowledgement 213 is then transmitted from the user plane gateway 108 to the source apparatus 101 and a device session transfer acknowledgement 217 is transmitted from the user plane gateway 110 to the target apparatus 103. Network address modifications 215 based on the mapping table above can then be performed, after which modified packets can be transmitted towards the target device 103.

If there is no activity from the source device 101, the user plane gateway 108 can send dummy packets (as long as the session is active) using the source device's uplink network address, so that the core network does not release the source device uplink IP address due to an inactivity timeout.

Accordingly, session mobility / continuity can be achieved in a seamless network assisted manner which is transparent to the application server 111.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

**1.** A method for transferring, from a source apparatus to a target apparatus, a communication session, the method comprising:
transmitting an out-of-band or in-band session transfer handshake request from the source apparatus to the target apparatus;
receiving, at a user plane gateway of the source apparatus and in response to an out-of-band or in-band session transfer handshake request acknowledgement received at the source apparatus from the target apparatus, a first session transfer request from the source device;
receiving, at a user plane gateway of the target apparatus, a second session transfer request from the target device, the second session transfer request transmitted from the target device in response to receipt of session transfer data transmitted out-of-band or in-band by the source device;
performing a session transfer handshake between the user plane gateways of the source and target apparatus;
validating the first and second session requests; and
modifying network address information of data packets passing through the user plane gateways whereby to enable data packets destined for the source device to be directed to the target device and data packets originating from the target device to have an uplink network address of the source device.

**2.** A method as claimed in claim 1, further comprising:
performing a session transfer handshake acknowledgement between the user plane gateways of the source and target apparatus following successful validation of the first and second session requests.

**3.** A method as claimed in claim 1 or 2, further comprising:
transmitting a session transfer acknowledgement from the user plane gateway of the source apparatus to the source apparatus.

**4.** A method as claimed in any preceding claim, further comprising:
transmitting a session transfer acknowledgement from the user plane gateway of the target apparatus to the target apparatus.

**5.** A method as claimed in any preceding claim, wherein the network address information of data packets passing through the user plane gateways is modified using address mapping data at the respective user plane gateways.

**6.** A method as claimed in any preceding claim, wherein the session transfer handshake request from the source device includes an authentication token and a network address of the user plane gateway of the source apparatus.

**7.** A method as claimed in any preceding claim, wherein the session transfer handshake acknowledgement from the target device includes an authentication token and a network address of the user plane gateway of the target apparatus

**8.** A method as claimed in any preceding claim, wherein validating the first session request includes authenticating the source apparatus using an authentication token received at the user plane gateway of the source apparatus.

**9.** A method as claimed in any preceding claim, wherein validating the second session request includes authenticating the target apparatus using an authentication token received at the user plane gateway of the target apparatus.

**10.** A method as claimed in any preceding claim, wherein the first session transfer request is validated at the user plane gateway of the source device.

**10.** A method as claimed in any preceding claim, wherein the second session transfer request is validated at the user plane gateway of the target device.

**11.** A method as claimed in any preceding claim, wherein the user plane gateways of the source apparatus and the target apparatus are provided on the same network entity or element.

**12.** A method as claimed in any preceding claim, wherein the user plane gateways of the source apparatus and the target apparatus are provided on respective different network entities or elements.

**13.** A computer program product, comprising a computer usable medium having computer readable program code embodied therein, said computer readable program code adapted to be executed to implement a method for transferring, from a source apparatus to a target apparatus, a communication session as claimed in any of claims 1 to 12.

**14.** A user plane gateway, the user plane gateway configured to:
receive, in response to an out-of-band or in-band session transfer handshake request acknowledgement received at a source apparatus from a target apparatus, a first session transfer request from the source device;
perform a session transfer handshake with a user plane gateway of the target apparatus; and
modify network address information of data packets passing through the user plane gateway whereby to enable data packets destined for the source device to be directed to the target device and data packets originating from the target device to have an uplink network address of the source device.

**15.** A user plane gateway, the user plane gateway configured to:
receiver a second session transfer request from a target device, the second session transfer request transmitted from the target device in response to receipt of session transfer data transmitted out-of-band or in-band by a source device; and
perform a session transfer handshake with a user plane gateway of the source apparatus.
